Europäisches Patentamt

European Patent Office

Office européen des brevets

(11) Veröffentlichungsnummer: **0 174 380**
**B1**

(12) # EUROPÄISCHE PATENTSCHRIFT

(45) Veröffentlichungstag der Patentschrift:
01.03.89

(51) Int. Cl.⁴: **G 21 D 9/00,** G 21 C 13/10,
G 21 C 15/12, G 21 C 15/18,
G 21 C 1/00, G 21 C 11/08

(21) Anmeldenummer: 84110547.1

(22) Anmeldetag: 05.09.84

(54) **Anlage mit einem nuklearen Heizreaktor.**

(30) Priorität: **17.07.84 CH 3468/84**

(43) Veröffentlichungstag der Anmeldung:
**19.03.86 Patentblatt 86/12**

(45) Bekanntmachung des Hinweises auf die Patenterteilung:
**01.03.89 Patentblatt 89/9**

(84) Benannte Vertragsstaaten:
**AT BE DE FR GB NL SE**

(56) Entgegenhaltungen:
**DE-A- 1 684 936**
**FR-A- 1 414 277**
**US-A- 3 275 523**

**REVUE GENERALE DE THERMIQUE, Band 17, Nr.
200/201, August-September 1978, Seiten 718-720, FR:
"Note d'information du commisariat à l'énergie
atomique: Les centrales nucléaires calogènes: Le
projet thermos**

(73) Patentinhaber: **GEBRÜDER SULZER
AKTIENGESELLSCHAFT, Zürcherstrasse 9,
CH-8401 Winterthur (CH)**

(72) Erfinder: **Straub, Hermann, Seuzacherstrasse 62,
CH-8400 Winterthur (CH)**

(74) Vertreter: **Dipl.-Ing. H. Marsch Dipl.-Ing. K. Sparing
Dipl.-Phys.Dr. W.H. Röhl Patentanwälte,
Rethelstrasse 123, D-4000 Düsseldorf 1 (DE)**

**Beschreibung**

Die Erfindung betrifft eine Anlage mit einem nuklearen Heizreaktor, der ein Druckgefäss aufweist, in dem ein Reaktorkern sowie mindestens ein ein Kühlmedium führender Primärwärmeübertrager enthalten sind, der über das Druckgefäss durchdringende Kühlmittelleitungen zusammen mit mindestens einem Sekundärwärmeübertrager einen Kühlkreislauf bildet, in dem Fördermittel zum Umwälzen des Kühlmittels vorgesehen sind, wobei das Druckgefäss von einer Wärmesenke umgeben ist.

Es ist eine solche Anlage bekannt, die eine relativ kleine Leistung, nämlich im Bereich von 10 bis 50 MW, aufweist und dazu bestimmt ist, in der Nähe von Verbraucherzentren aufgestellt zu werden. In der bekannten Anlage besteht die das Druckgefäss umgebende Wärmesenke aus einem mit Wasser gefüllten Bassin, das von einem Containment aus Beton begrenzt ist, wodurch ein genügender Strahlenschutz gewährleistet ist. Um einen guten Wirkungsgrad der Anlage zu erzielen, ist der Heizreaktor gegenüber der Wärmesenke wärmeisoliert. Im Falle einer Störung der Reaktorkühlung entsteht die sog. Nachwärme, die mittels eines besonderen Wärmeübertragers abgeführt wird, der ausserhalb des Druckgefässes, aber innerhalb des Containments im Wasser der Wärmesenke angeordnet ist. Dieser Wärmeübertrager ist also über Leitungen mit dem Druckgefäss verbunden, damit das Reaktorkühlmittel im Kern und in dem Wärmeübertrager zirkulieren kann. Ausserdem muss dieser Wärmeübertrager aus Gründen der Erdbebensicherheit mit dem Druckgefäss mechanisch fest verbunden sein. Es sind auch Mittel vorzusehen, durch die der Wärmeübertrager im Normalbetrieb vom Reaktorkühlmittel abgeschaltet ist und im genannten Störungsfall in den Kühlkreislauf des Reaktorkühlmittels eingeschaltet wird.

Das Vorhandensein des besonderen Wärmeübertragers mit seiner mechanischen und leitungsmässigen Verbindung mit dem Druckgefäss sowie die Mittel zum Ein- und Abschalten dieses Wärmeübertragers bedingen einen grossen konstruktiven Aufwand, der auch kostenmässig erheblich ist. Bei einem Bruch im Wärmeübertrager oder in der Verbindungsleitung kann kontaminiertes Reaktorkühlmittel in das Wasser der Wärmesenke gelangen, was aus Gründen der Strahlensicherheit nicht zulässig ist.

Es ist daher Aufgabe der Erfindung, die Anlage der eingangs genannten Art so zu verbessern, dass auf einfache und kostengünstige Weise bei einem Versagen der normalen Kühlung des Reaktorkerns die Nachwärmeabfuhr in die imgebende Wärmesenke sichergestellt wird und dass zugleich die wegen der Verwendung der Anlage in der Nähe von Verbraucherzentren besonders strengen Sicherheitsvorschriften erfüllt werden.

Diese Aufgabe wird erfindungsgemäss dadurch gelöst, dass das Druckgefäss doppelwandig ausgebildet ist, wobei die beiden Wände einen Zwischenraum begrenzen, dass mit dem Zwischenraum ein Vorrat mindestens eines fliessbaren, wärmeisolierenden Mediums und ein Vorrat mindestens eines fliessbaren wärmeleitenden Mediums in Verbindung steht und dass Mittel vorgesehen sind, die für den Normalbetrieb des Heizreaktors den Zwischenraum mit dem wärmeisolierenden Medium füllen und die bei einer Störung der Kühlung des Reaktorkerns den Zwischenraum mit dem wärmeleitenden Medium füllen.

Mit dieser Gestaltung wird es möglich, die für die Aufrechterhaltung eines guten Wirkungsgrades während des Normalbetriebes notwendige Wärmeisolierung im Falle einer Störung der Kühlung des Reaktorkerns durch eine Füllung mit wärmeleitendem Medium zu versehen, so dass dann die Nachwärme über das doppelwandige Druckgefäss direkt in die es umgebende Wärmesenke abgeführt werden kann. Es ist also nicht mehr notwendig, einen besonderen Wärmeübertrager für diesen Zweck vorzusehen. Damit ist also der konstruktive Aufwand für die Anlage erheblich verringert und ausserdem sind die Sicherheitsbelange besser als in der bekannten Anlage gewahrt, weil in dem genannten Störungsfall kein Reaktorkühlmittel zwecks Abfuhr der Nachwärme aus dem Druckgefäss herausgeführt werden muss. Auch sonst ist wegen der doppelwandigen Ausbildung des Druckgefässes eine grössere Sicherheit vorhanden. Ausserdem bietet die neue Anlage die Möglichkeit, sie mit einer inhärenten Sicherheit zu versehen, d.h. dass diese Sicherheit auf natürliche Weise selbsttätig und von äusseren Einflüssen unabhängig wirkt. Die erfindungsgemässe Gestaltung ist auch bei Anlagen anwendbar, bei denen die das Druckgefäss umgebende Wärmesenke nicht aus Wasser, sondern aus natürlichem Gestein besteht. z.B. beim Einbau der Anlage in eine Felskaverne.

Eine bevorzugte Ausführungsform der Erfindung ist im Anspruch 2 angegeben. Da als wärmeisolierendes Medium Luft dient, kann im Störungsfall nach dem Abschalten des Gebläses die Schwerkraft ausgenützt werden, um den Zwischenraum mit Wasser — unter gleichzeitigem Verdrängen der Luft — zu füllen.

Die Ausführungsform gemäss Anspruch 5 ergibt eine besonders gute Zugänglichkeit zum Inneren des Druckgefässes, ohne Benachteiligung der allgemeinen Sicherheit des Heizreaktors.

Die Führungswand nach Anspruch 6 ermöglicht eine natürliche Konvektionsströmung innerhalb des Zwischenraumes im zylindrischen Abschnitt, wodurch im Fall eines Versagens sämtlicher Kühlsysteme des Heizreaktors die Wärmeübertragung durch den Zwischenraum hindurch verbessert wird.

Eine zusätzliche Begünstigung der Wärmeübertragung durch den Zwischenraum hindurch im Falle eines Versagens der Kühlsysteme, gekoppelt mit einer wesentlichen Erhöhung der Sicherheit des Heizreaktors — insbesondere beim Transport —, wird durch die Weiterbildung gemäss Anspruch 8 erreicht.

Der Strahlenschutzschild gemäss Anspruch 9 verbessert zusätzlich die kompakte Ausführung des Heizreaktors.

Durch die Ausführungsform gemäss dem Anspruch 10 wird das Wasser aus der Wärmesenke zum Füllen des Zwischenraumes mitverwendet, ohne dass die Sicherheitsbelange beeinträchtigt werden.

Das Verschlusselement nach dem Anspruch 11 emöglicht zusätzlich eine wesentliche Verbesserung der inhärenten Sicherheit.

Ein Ausführungsbeispiel der Erfindung und der damit verbundenen Vorteile wird anschliessend anhand der Zeichnung beschrieben. Es zeigen:

Fig. 1 einen schematisierten Vertikalschnitt durch eine erfindungsgemässe Anlage mit Heizreaktor,

Fig. 2 in kleinerem Massstab als Fig. 1 eine schematisierte Draufsicht der Anlage, wobei der Deckel vom Heizreaktor abgenommen ist,

Fig. 3 eine Schmelzsicherung des Heizreaktors, in grösserem Massstab als Fig. 1,

Fig. 4 einen Schnitt gemäss der Linie IV-IV in Fig. 3,

Fig. 5 eine perspektivische Ansicht eines Teils der Schmelzsicherung nach Fig. 3, teilweise im Schnitt, und

Fig. 6 eine perspektivische Ansicht eines anderen Teils der Schmelzsicherung, ebenfalls teilweise im Schnitt.

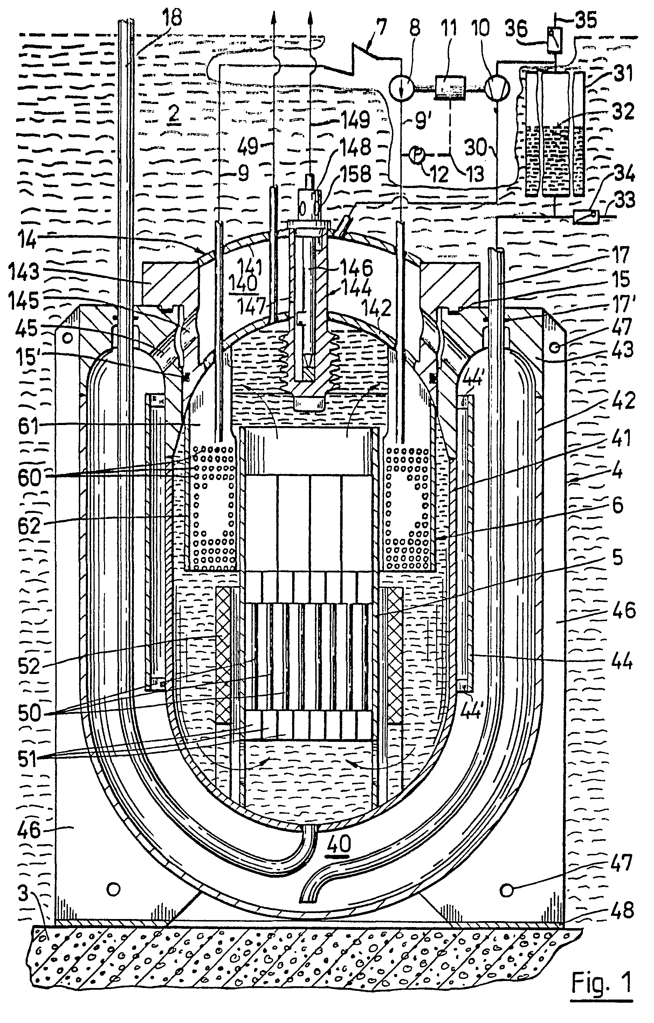

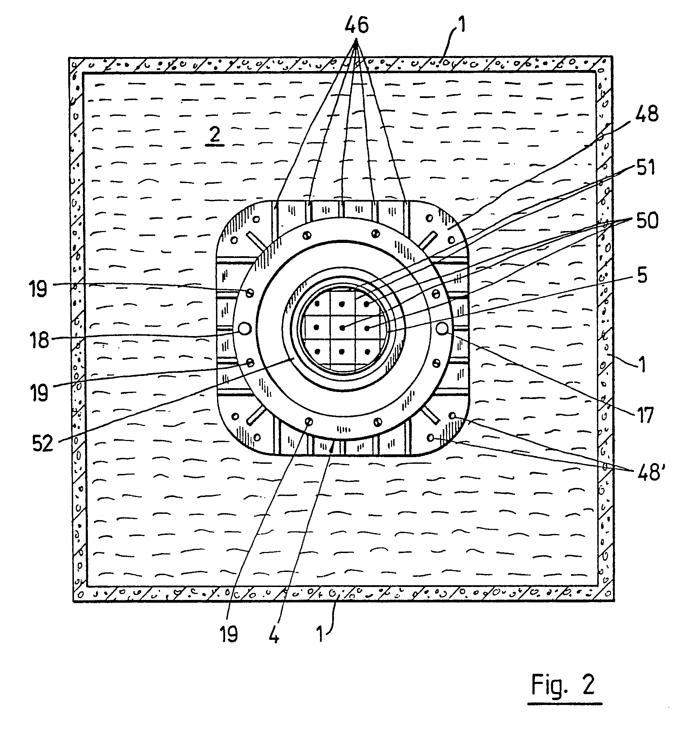

Nach Fig. 1 und 2 steht ein nuklearer Heizreaktor in einem mit entmineralisiertem Wasser gefüllten Bassin 2, das von vier aus Beton hergestellten Wänden 1, einem Boden 3 und einer in der Zeichnung nicht dargestellten abnehmbaren Decke begrenzt ist. Diese Betonteile bilden ein Containment, das zusammen mit der Wasserfüllung auf bekannte Weise sämtliche Strahlungen aus dem Heizreaktor 1 abschirmt und zugleich den Heizreaktor gegen schädliche Einwirkungen von aussen — z.B. auch durch Erdbeben und Flugzeugabsturz — schützt. Das Bassinwasser bildet ausserdem eine den Heizreaktor umgebende Wärmesenke.

Der Heizreaktor weist ein Druckgefäss 4 auf, in dem ein Reaktorkern 5 untergebracht ist, der auf bekannte Art mehrere Brennelementführungen 51 enthält, in denen Brennelemente 50 angeordnet sind. In der Zeichnung nicht dargestellte Mittel ermöglichen auf bekannte Weise das Beladen und Entladen des Reaktors sowie das Steuern der nuklearen Reaktion im Reaktorkern 5. Der Kern 5 ist von einem Strahlenschutzschild 52 umgeben, der ebenso wie der Kern im unteren Bereich mehrere Durchgangsöffnungen für das im Kern zirkulierende Wasser aufweist. Das im wesentlichen zylindrische Druckgefäss 4 ist doppelwandig ausgebildet, indem es eine innere Wand 41, eine äussere Wand 42 und eine diese Wände verbindende Stirnwand 43 aufweist. Zwischen den Wänden 41 und 42 ist ein Zwischenraum 40 vorhanden. Zum Druckgefäss gehört ein Deckel 14, der mittels nichtgezeigter Zuganker an der Stirnwand 43 befestigt ist. Der Deckel 14 besteht aus einer äusseren Kalotte 141, einer inneren Kalotte 142, und einem die beiden Kalotten verbindenden Ring 143; diese Teile schliessen einen Deckelhohlraum 140 ein, der mit dem Zwischenraum 40 über Bohrungen 145 und 45 verbunden ist. Der Ring 143 ragt im Bereich der Stirnwand 43 in den zylindrischen Abschnitt des Gefässes 4, wobei die Bohrungen 45 und 145 gegen das Bassin 2 mittels einer Flanschdichtung 15 und gegen das Innere des Druckgefässes 4 mittels einer radialen Dichtung 15' abgedichtet sind. Das eine vertikale Längsachse aufweisende Druckgefäss 4 geht unten in einen sphärischen Boden über. Im Raum 40 ist eine Führungsnut 44 angeordnet, die über radiale Stege 44' an der Wand 41 befestigt ist.

Ein im Innern des Gefässes 4 angeordneter Primärwärmeübertrager 6 ist mittels vertikaler Tragplatten 61 am Deckel 14 befestigt und besteht aus schraubenlinienförmig gewickelten Rohren 60, die sich um den oberen Bereich des Kernes 5, oberhalb des Strahlenschutzes 52 erstrecken. Das aus den Rohren 60, die in die Tragplatten 61 eingeschraubt sind, gebildete Rohrbündel ist von einem mit den Tragplatten 61 verbundenen zylindrischen Mantel 62 umgeben. Eine den Deckel 14 durchstossende Kühlmittelleitung 9, die mittels nichtgezeigter Kollektoren auf bekannte Weise mit den Rohren 60 verbunden ist, führt in diesen Rohren erhitztes Wasser zu einem Sekundärwärmeübertrager 7. In gleicher Weise verbindet eine eine Umwälzpumpe 8 enthaltende Kühlmittelleitung 9' den Sekundärwärmeübertrager 7 mit den Rohren 60 und führt diesen abgekühltes Wasser zu. Der Primärwärmeübertrager 6, der Sekundärwärmeübertrager 7, die Kühlmittelleitungen 9 und 9' sowie die Pumpe 8 bilden also ein geschlossenes Kühlsystem. Dank der Befestigung des Primärwärmeübertragers am Deckel 14 ist er beim Entfernen des Deckels 14 zusammen mit diesem ausbaubar. Das Innere des Druckgefässes 4 ist mit behandeltem, entmineralisiertem Wasser gefüllt und weist in seinem oberen Bereich ein den Deckel 14 und das Wasser im Bassin 2 durchstossendes Entgasungsrohr 49 auf.

Auf der Aussenseite weist das Druckgefäss 4 über seinen Umfang verteilt eine Anzahl vertikaler Kühlrippen 46 auf, die an ihrem unteren Ende mit einer im wesentlichen quadratischen Grundplatte 48 fest verbunden sind. Die Grundplatte 48 ist mit mehreren Löchern 48' (Fig. 2) versehen, durch die nicht gezeigte Befestigungselemente, z.B. Schrauben, hindurchgeführt sind, um den Heizreaktor am Boden 3 zu verankern. Die Kühlrippen 46 sind mit Löchern 47 versehen, an denen Mittel zum Heben und Transportieren des Heizreaktors angebracht werden können. Die Kühlrippen 46 und die Grundplatte 48 sind so ausgelegt, dass sie eine Knautschzone zum Schutze des Reaktors gegen äussere mechanische Einwirkungen bilden.

Zur Anlage gehört ferner ein Flutbehälter 31, der in seinem unteren Teil mit einem fliessbaren, wärmeleitenden Medium, hier Wasser und in seinem oberen Teil mit einem fliessbaren, wärmeisolierenden Medium, hier Luft, gefüllt ist, die über eine Leitung 35 der Atmosphäre entnommen wird. Die Luftseite des Flutbehälters 31 ist mittels einer Leitung 30, die ein Gebläse 10 enthält, mit dem obersten Bereich des Deckelhohlraumes 140 verbunden. Die Wasserseite des Flutbehälters 31 ist mittels einer die Stirnwand 43 durchdringenden Notkühlleitung 17 mit dem Zwischenraum 40 verbunden; die Leitung mündet nahe der tiefsten Stelle des Raumes 40. Eine um die Notkühlleitung 17 gelegte Dichtung 17' dichtet in der Stirnwand 43 den Zwischenraum gegenüber dem Bassin 2 ab. Eine Notspeiseleitung 33 mit einstellbarem Rückschlagventil 34 mündet zwischen der Stirnwand 43 und dem Flutbehälter 31 in die Notkühlleitung 17 und kann somit Wasser aus dem Bassin 2 zur Notkühlleitung 17 fliessen lassen. Der Flutbehälter 31 hat ein Raumvolumen, das etwa zweimal so gross ist wie das Raumvolumen des Zwischenraumes 40 und 140. Die Luftzufuhrleitung 35 weist ein Rückschlagventil 36 auf, das Luft von der Atmosphäre zur Leitung 30 durchfliessen lässt.

Ein Elektromotor 11 treibt sowohl die Umwälzpumpe 8 als auch das Gebläse 10. Ein Druckfühler 12, der an der Kühlmittelleitung 9' angeschlossen ist und über eine Signalleitung 13 mit dem Elektromotor 11 in Wirkungsverbindung steht, überwacht den Druck des Kühlmittels im Kühlsystem und schaltet den Motor bei Unterschreiten eines bestimmten Druckes ab. Statt des gemeinsamen Motors 11 könnte auch je ein Motor für die Pumpe und das Gebläse vorgesehen sein, die dann gleichzeitig ein- und ausgeschaltet werden können.

Für die Zufuhr des Wassers, das den Reaktorkern 5 kühlt, dient eine Wasserleitung 18, die an der tiefsten Stelle der inneren Wand 41 in das Innere des Druckgefässes 4 mündet und sich durch den Zwischenraum 40 hindurch nach oben erstreckt; sie durchdringt die Stirnwand 43 sowie das Wasser des Bassins 2 und ist in gleicher Weise wie die Notkühlleitung 17 in der Wand 43 abgedichtet. Über die Leitung 18 kann das Wasser aus dem Inneren des Gefässes 4 auch entfernt werden. Acht dicht verschliessbare Inspektionsöffnungen 19 (Fig. 2) sind gleichmässig über die Stirnwand 43 verteilt und dienen zur Inspektion des Zwischenraumes 40 mit Hilfe von Prüfsonden und -geräten.

Im Zentrum des Deckels 14 ist eine Schmelzsicherung 144 angeordnet, die im wesentlichen aus einem zweiteiligen Gehäuse 147 und 148, einem zylindrischen, im Gehäuse 147 vertikal bewegbaren Verschlusselement 146 und einem schmelzbaren Stützelement 16 besteht.

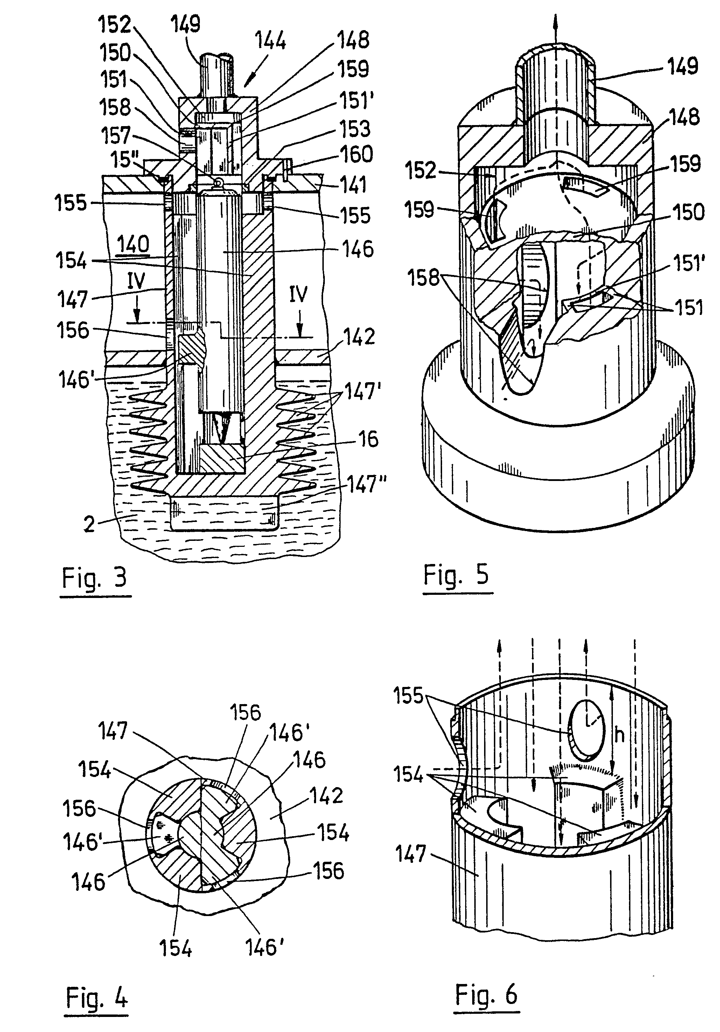

Die Kappe 148 des zweiteiligen Gehäuses 147, 148 bildet gemäss Fig. 3 und 5 einen hohlen Zylinder, an dessen unterem Ende ein äusserer Flansch vorgesehen ist, über den die Kappe in nicht näher dargestellter Weise an der äusseren Kalotte 141 des Deckels befestigt ist. Am oberen Ende des Zylinders ist eine zu ihm koaxiale Entlüftungsleitung 149 angeschlossen, die über ein nicht gezeichnetes Filtersystem mit der Atmosphäre kommuniziert. Im Inneren ist die Kappe 148 durch sechs über den Umfang verteilte, radiale Wände 151 in sechs Teilräume unterteilt, die sich über einen mittleren Bereich des Zylinders erstrecken und oben an einer Querwand 150 enden. Die Teilräume haben abwechselnd eine radiale Öffnung 158 in der Zylinderwand und eine axiale Öffnung 159 in der Querwand 150. Die drei radialen Öffnungen 158 verbinden die zugehörigen Teilräume mit dem Bassin 2 und die drei axialen Öffnungen 159 die zugehörigen Teilräume über einen Sammelraum 152 mit der Entlüftungsleitung 149. Im Zentrum der Kappe 148 befindet sich unterhalb der Querwand 150 ein Raum, der zu jenen drei Teilräumen hin offen ist, die die radialen Öffnungen 158 aufweisen. Gegen die anderen drei Teilräume ist der zentrale Raum durch Wände 151' getrennt. Die Kappe 148 ragt mit ihrem unteren Ende etwas in das Gehäuse 147 und ist mittels Dichtung 15'' an der äusseren Kalotte 141 abgedichtet. Ein Dichtring 153 für das Verschlusselement 146 ist an der anderen inneren Kante der Kappe 148 angeordnet. Ein an der äusseren Kalotte 141 befestigter vertikaler Stift 160 ragt in eine Bohrung im Flansch der Kappe 148 und bewirkt, dass die Kappe nur in einer einzigen Position eingebaut werden kann.

Das Gehäuse 147 weist eine axiale Sackbohrung auf, die zur Kappe 148 hin offen ist. Diese Sackbohrung weist in axialer Richtung drei Führungsrippen 154 auf, die das Verschlusselement 145 führen. Die Führungsrippen 154 erstrecken sich, vom Boden des Gehäuses 147 ausgehend, bis zu einem Abstand «h» (Fig. 6), der von der obersten Stirnfläche des Gehäuses 147 aus gemessen wird. Sie sind jeweils unterhalb einer der drei Öffnungen 159 in der Querwand 150 der Kappe 148 angeordnet. Oberhalb jeder Führungsrippe 154 ist eine radiale obere Öffnung 155 in der Wand des Gehäuses 147 vorgesehen, die in den Deckelhohlraum 140 mündet, und zwar nahe unter der äusseren Kalotte 141. Zwischen je zwei Führungsrippen 154 weist die Wand des Gehäuses 147 eine radiale Öffnung 156 auf, die nahe über der inneren Kalotte 142 in den Deckelhohlraum 140 mündet. Die drei Öffnungen 156 liegen also unterhalb der radialen Öffnung 158 in der Kappe 148.

Das Verschlusselement 146 weist am oberen Ende eine konische Dichtfläche auf, die mit dem Dichtring 153 dichtend zusammenwirkt. Am unteren Ende des Verschlusselementes 146 ist ein konischer Fortsatz vorhanden, dessen nach unten gerichtete Spitze auf dem Stützelement 16 ruht, das auf dem Boden der Sackbohrung liegt. Das Verschlusselement 146 kann bei allen in Frage kommenden Temperaturen des Heizreaktors im Gehäuse 147 leicht gleiten. Das Stützelement 16 besteht aus einer Zinnlegierung, die bei ca. 230°C schmilzt. Im Bereich der unteren Öffnungen 156 weist das Verschlusselement 146 drei Rippen 146' auf, die den Raum zwischen den drei Führungsrippen 154 ausfüllen, ohne dass die Beweglichkeit des Elementes 16 beeinträchtigt wird, und deren oberste Fläche bei fehlendem Stützelement 16 knapp unterhalb der unteren Öffnungen 156 liegen. Am oberen Ende ist am Verschlusselement 146 eine Öse 157 befestigt.

Das Gehäuse 147 erstreckt sich mit seinem unteren Abschnitt in das Innere des Druckgefässes 4. An diesem Abschnitt weist das Gehäuse 147 aussen horizontale ringförmige Kühlrippen 147' und auf der Unterseite vertikale rechteckige Kühlrippen 147'' auf; die Kühlrippen 147' und 147'' verbessern die Wärmeübertragung vom Wasser im Innern des Druckgefässes 4 zum Stützelement 16. Der Oberflächenbereich der Sackbohrung, der beim Schmelzen des Stützelementes 16 eventuell mit dem geschmolzenen Material in Kontakt kommen kann, ist mit einem — beispielsweise keramischen — Material überzogen, das sich mit dem geschmolzenen Material schwer verbindet, so dass nach einem Schmelzen des Stützelementes 16 dessen Material leicht entfernt werden kann.

Die beschriebene Anlage funktioniert wie folgt:

Der Betrieb des Heizreaktors erfolgt auf bekannte Weise, wobei die durch die Brennelemente 50 erzeugte Wärme das Wasser innerhalb des Druckgefässes 4 heizt und durch Konvektion in Bewegung setzt, so dass das Wasser innerhalb des Kernes 5 steigt, oberhalb diesem nach aussen umgelenkt wird und anschliessend nach unten durch den Primärwärmeübertrager 6 strömt; danach gelangt das Wasser über die Öffnungen im unteren Bereich des Kernes 5 und des Strahlenschutzschildes 52 wieder zu den Brennelementen 50. Beim Durchströmen des Primärwärmeübertragers 6 wird die von den Brennelementen 50 erzeugte Wärme an das in den Rohren 60 strömende Kühlwasser übertragen. Die Pumpe 8 fördert das Kühlwasser über die Kühlleitung 9 zum Sekundärwärmeübertrager 7, wo die Wärme abgegeben und für Heizzwecke verwendet wird; das abgekühlte Kühlwasser wird dann über die Leitung 9' wieder dem Primärwärmeübertrager 6 zugeleitet.

Das Gebläse 10 saugt dabei Luft aus dem Flutbehälter 31 und drückt sie über die Leitung 30 in den Deckelhohlraum 140 und den Zwischenraum 40. Dadurch staut sich eine Wassermenge im Flutbehälter 31 und eventuell in mindestens einem Teil der Notkühlleitung 17 auf; der Behälter 31 und die Leitung 17 sind gross genug, um die ganze Wassermenge aus den Räumen 40 und 140 vollständig aufzunehmen. Über die Notspeiseleitung 33 und das einstellbare Rückschlagventil 34 wird automatisch ein genügend hohes Niveau 32 im Behälter 31 sichergestellt.

Im Falle eines Versagens der Kühlwasserzirkulation, beispielsweise durch eine Panne in der Pumpe 8 oder im Elektromotor 11, werden gleichzeitig die Pumpe 8, Elektromotor 11 und das Gebläse 10 stillgesetzt. Damit sinkt der Luftdruck in den Räumen 140 und 40 und unter der Wirkung der Schwerkraft überflutet das Wasser im Flutbehälter 31 die genannten Räume. Die Luft wird dabei über die Leitung 30 und das stillgesetzte Gebläse 10 — oder eine zu öffnende, das Gebläse umgehende Bypassleitung — in den Flutbehälter 31 gedrückt. Die Luftzufuhrleitung 35 verhindert das Entstehen eines Unterdruckes im Flutbehälter 31, wobei das Rückschlagventil 36 ein eventuelles Ausfliessen von radioaktiven Stoffen in die Atmosphäre unterbindet.

Während beim Normalbetrieb die luftgefüllten Räume 40 und 140 eine gute Wärmeisolation zwischen dem Heizreaktor und dem Wasser im Bassin 2 gewährleisten, ist beim Ausfall der Kühlung mit dem Füllen dieser Hohlräume mit wärmeleitendem Wasser die Wärmeabfuhr aus dem Heizreaktor 1 gesichert. Das im letzteren Falle an der inneren Wand 41 sich erwärmende Wasser steigt dann zwischen dieser Wand 41 und der Führungswand 44 auf und verursacht somit eine geordnete Konvektionsströmung innerhalb des Zwischenraumes 40, die die Übertragung der Wärme an die äussere Wand 42 weiter verbessert. Die Wärmeübertragung von der äusseren Wand 42 an das Wasser im Bassin 2 wird noch durch die Kühlrippen 46 verbessert. Bei Bedarf kann das Wasser im Bassin 2 ebenfalls gekühlt werden, was jedoch nur im Ausnahmefall nötig ist, da das Bassin 2 so gross dimensioniert ist, dass bei allen vorsehbaren Störfällen die anfallende Wärmemenge darin aufgenommen werden kann.

Der Elektromotor 11 kann auch in Abhängigkeit der Temperatur, z.B. nach dem Sekundärwärmeübertrager 7 oder innerhalb des Druckgefässes 4, abgestellt werden.

Um nach einem Auffüllen der Räume 40 und 140 mit Wasser, normale Betriebsverhältnisse wieder herzustellen, genügt es, das Gebläse 10 in Betrieb zu setzen, wodurch wieder Luft über die Leitung 30 in die Räume 40 und 140 gedrückt wird, während das Wasser aus diesen Räumen über die Notkühlleitung 17 zurück zum Flutbehälter 31 gelangt.

Infolge der Strahleneinwirkungen entstehen bekanntlich im Innern des Druckgefässes 4 Gase, die auf übliche Weise durch das Entgasungsrohr 49 abgeführt werden.

Die Schmelzsicherung 144 bietet eine zusätzliche, inhärente Sicherheit, die unabhängig von äusseren Einflüssen die Wasserfüllung der Räume 40 und 140 automatisch bewirkt, sogar bei laufendem Gebläse 10, falls die Temperatur innerhalb des Druckgefässes 4 den Grenzwert 230°C erreicht. Bei dieser Temperatur schmilzt das Stützelement 16 und fliesst zwischen die Führungsrippen 154, so dass das Verschlusselement 146 sich durch das eigene Gewicht nach unten bewegt. Damit wird die Verbindung zwischen dem Gehäuse 147 und der Kappe 148 geöffnet und über die radialen Öffnungen 158 im Verteilerdeckel 148 gelangt Wasser aus dem Bassin 2 in die Kappe 148 und fällt zwischen den Führungsrippen 154 hinunter zu den Öffnungen 156, über die es dann in den Deckelhohlraum 140 strömt und dort weiter über die Bohrungen 145 und 45 in den Zwischenraum 40. Nach Entleerung der Entlüftungsleitung 149 durch Strahlpumpenwirkung des einströmenden Wassers, strömt die aus dem Zwischenraum 40 verdrängte Luft über die oberen Öffnungen 155 — zwischen den hinunterfallenden Wasserstrahlen und diesen entgegengerichtet (im Bereich der Kappe 148 vom Wasser durch die vertikalen Wände 151 und 151' getrennt) — durch die Öffnungen 159 in der Querwand 150 in den Sammelraum 152 und schliesslich aus diesem in die Entlüftungsleitung 149. Die Rippen 146' verhindern während der Bewegung des Verschlusselementes 146, dass Kühlwasser den Bereich des Stützelementes 16 erreicht und dort den Schmelzvorgang stört; das wenige durch die Spalten zwischen Rippen 146' und Gehäuse 147 durchsickernde Wasser wird infolge der hohen Temperatur sofort verdampft und fliesst nach oben, durch den Spalt zurück und dabei einem weiteren Eindringen von Wasser entgegenwirkend. Nachdem das Verschlusselement 146 ganz offen ist, spielt es keine Rolle mehr, ob kühlendes Wasser in den Bereich des Stützelementes 16 hinunter fliesst. Eine etwaige Aufwärtsbewegung des Verschlusselementes 146 infolge eventueller Dampfbildung unterhalb der Rippen 146' verhindert das Eigengewicht des Verschlusselementes.

Im übrigen verhält sich der Heizreaktor nach einem Schmelzen der Schmelzsicherung 144 wie bereits oben für den Fall eines Stillstandes des Gebläses 10 beschrieben.

Bevor nach einem Schmelzen der Schmelzsicherung 144 der Heizreaktor 1 wieder in Betrieb genommen werden kann, muss die Kappe 148 abmontiert werden, das Verschlusselement 146 mit Hilfe der Öse 157 aus dem Gehäuse 147 gehoben, und das geschmolzene Material des Stützelementes 16 entfernt werden. Danach wird ein neues Stützelement 16 in das Gehäuse 147 eingeführt und die Schmelzsicherung 144 wieder zusammengebaut. Die Höhe des Stützelementes 16 ist so bemessen, dass eine genügende Anpresskraft des Verschlusselementes 146 am Dichtring 153 besteht.

Es ist auch denkbar, die radialen Öffnungen 158 mit dem unteren Teil des Flutbehälters 31 oder mit dem oberen Bereich der Notkühlleitung 17 zu verbinden und somit bei einem Schmelzen der Schmelzsicherung 144 die Räume 140 und 40 mit dem Wasser aus dem Flutbehälter 31 zu überfluten.

Abweichend von dem beschriebenen Beispiel ist es auch möglich, die Pumpe 8 und das Gebläse 10 mit verschiedenen Antriebsmitteln zu versehen, die elektrisch, elektronisch, hydraulisch oder pneumatisch miteinander synchronisiert sind. Es ist auch möglich, sämtliche Sicherheitsvorrichtungen mehrfach redundant auszuführen. Es ist ferner möglich, die Schmelzsicherung mit zwei Verschlusselementen auszuführen, von denen eines den Wassereinlass und das andere die Entlüftung steuert.

Die Notkühlleitung 17 kann gedrosselt werden, so dass ein relativ hoher Druck in den Räumen 40 und 140 etwaigen Leckagen aus dem Inneren des Druckgefässes 4 entgegenwirkt.

Anstelle der Schmelzsicherung können auch andere Arten von Sicherheitsventilen verwendet werden, um dem Heizreaktor eine zusätzliche inhärente Sicherheit zu verleihen.

Wie bereits erwähnt, kann der Reaktor von einem anderen Medium als Wasser umgeben sein, das als Wärmesenke geeignet ist. Anstelle von Wasser kann ein anderes gut wärmeleitendes Medium zum Fluten der Räume 40 und 140 verwendet werden. Auch andere, von Luft verschiedene, wärmeisolierende Medien, können benützt werden, wobei Vakuum als ein besonders gut wärmeisolierendes Medium zu betrachten ist.

Die Erfindung lässt sich im Prinzip auf alle Reaktortypen anwenden, wie Siedewasser-Reaktor, Druckwasser-Reaktor, gasgekühlter Reaktor, Brüter-Reaktor, Hochtemperatur-Reaktor usw.

**Patentansprüche**

1. Anlage mit einem nuklearen Heizreaktor, der ein Druckgefäss (4) aufweist, in dem ein Reaktorkern (5) sowie mindestens ein ein Kühlmedium führender Primärwärmeübertrager (6) enthalten sind, der über das Druckgefäss durchdringende Kühlmittelleitungen (9, 9') zusammen mit mindestens einem Sekundärwärmeübertrager (7) einen Kühlkreislauf bildet, in dem Fördermittel (8) zum Umwälzen des Kühlmittels vorgesehen sind, wobei das Druckgefäss (4) von einer Wärmesenke (2) umgeben ist, dadurch gekennzeichnet, dass das Druckgefäss (4) doppelwandig ausgebildet ist, wobei die beiden Wände (41, 42) einen Zwischenraum (40) begrenzen, dass mit dem Zwischenraum ein Vorrat mindestens eines fliessbaren, wärmeisolierenden Mediums und ein Vorrat mindestens eines fliessbaren, wärmeleitenden Mediums in Verbindung steht und dass Mittel vorgesehen sind, die für den Normalbetrieb des Heizreaktors den Zwischenraum mit dem wärmeisolierenden Medium füllen und die bei einer Störung der Kühlung des Reaktorkerns den Zwischenraum mit dem wärmeleitenden Medium füllen.

2. Anlage nach Anspruch 1, dadurch gekennzeichnet, dass das wärmeisolierende Medium Luft ist und das wärmeleitende Medium Wasser ist, dass beide Medien in einem geodätisch höher als der Heizreaktor angeordneten Flutbehälter (31) enthalten sind und dass als Mittel zum Füllen des Zwischenraumes mit Luft ein Gebläse (10) zwischen dem Flutbehälter und dem oberen Ende des Zwischenraumes vorgesehen ist, wobei das gesamte Raumvolumen des Flutbehälters grösser ist als das gesamte Raumvolumen des Zwischenraumes und das maximal von Wasser erfüllte Volumen des Flutbehälters mindestens so gross wie das Raumvolumen des Zwischenraumes ist.

3. Anlage nach Anspruch 2, dadurch gekennzeichnet, dass für das Gebläse (10) und die Fördermittel (8) ein gemeinsamer Antriebsmotor (11) vorgesehen ist.

4. Anlage nach einem der Ansprüche 1 bis 3, dadurch gekennzeichnet, dass jede der beiden Wände (41, 42) des Druckgefässes (4) für die Auslegungstemperatur und den Auslegungsdruck dimensioniert ist.

5. Anlage nach einem der Ansprüche 2 bis 4, mit einem einen zylindrischen Abschnitt mit vertikaler Achse aufweisenden Druckgefäss (4), dadurch gekennzeichnet, dass das Druckgefäss mit einem abnehmbaren, ebenfalls doppelwandig (141, 142) ausgebildeten Deckel (14) versehen ist, dessen Zwischenraum mit dem im zylindrischen Abschnitt des Druckgefässes verbunden ist, dass die Kühlmittelleitungen (9, 9') zwischen dem Primärwärmeübertrager (6) und dem Sekundärwärmeübertrager (7) den Deckel durchdringen und dass die die Luft enthaltende Seite des Flutbehälters mit dem Zwischenraum (140) des Deckels verbunden ist, wogegen die das Wasser enthaltende Seite des Flutbehälters mit dem Zwischenraum im zylindrischen Abschnitt des Druckgefässes über eine Leitung (17) verbunden ist, die eine die beiden Wände im zylindrischen Abschnitt des Druckgefässes verbindende Stirnwand (43) durchdringt und bis in den untersten Bereich (40) des Zwischenraumes reicht.

6. Anlage nach Anspruch 5, dadurch gekennzeichnet, dass im Zwischenraum des Druckgefässes im Bereich des zylindrischen Abschnittes eine zylindrische Führungswand (44) angeordnet ist.

7. Anlage nach Anspruch 5, dadurch gekennzeichnet, dass der Primärwärmeübertrager (6) aus schraubenlinienförmig gewickelten Rohren (60) gebildet und am Deckel befestigt ist, so dass er mit diesem zusammen ausbaubar ist.

8. Anlage nach einem der Ansprüche 1 bis 7, dadurch gekennzeichnet, dass das Druckgefäss (4) aussen Kühlrippen (46) aufweist, die als Abstütz- und Transportstruktur ausgebildet sind und zugleich eine Knautschzone zum Schutze des Reaktors gegen äussere mechanische Einwirkungen bilden.

9. Anlage nach einem der Ansprüche 1 bis 8, dadurch gekennzeichnet, dass innerhalb des Druckgefässes um den Reaktorkern (5) herum ein Strahlenschutzschild (52) angeordnet ist.

10. Anlage nach einem der Ansprüche 2 bis 9, wobei die Wärmesenke (2) ein mit Wasser gefülltes, von einem Containment begrenztes Bassin (1) ist, dadurch gekennzeichnet, dass die das Wasser enthaltende Seite des Flutbehälters über ein Rückschlagventil (34) mit dem Wasser im Bassin verbunden ist, so dass das Wasser zum Füllen des Zwischenraumes durch Wasser aus dem Bassin ergänzt werden kann.

11. Anlage nach einem der Ansprüche 1 bis 10, dadurch gekennzeichnet, dass mindestens ein durch sein Eigengewicht von einer Normalbetriebslage in eine Sicherheitslage bewegbares Verschlusselement (146) vorgesehen ist, das mittels eines mit dem Innern des Druckgefässes thermisch verbundenen, sonst davon gasdicht getrennten Stützelement (16) der Normalbetriebslage gegen einen Dichtsitz (153) gedrückt wird, und dass das Stützelement aus einem Material besteht, das bei Überschreiten einer vorbestimmten Sicherheitstemperatur schmilzt.

12. Anlage nach den Ansprüchen 2, 10 und 11, mit vertikal bewegbarem Verschlusselement (146), dadurch gekennzeichnet, dass oberhalb des Dichtsitzes (153) ein erster Raum (148) vorhanden ist, der durch mindestens eine vertikale Wand (151) in mindestens zwei voneinander getrennte, zum Dichtsitz hin offene Teilräume (147, 148) unterteilt ist, von denen der eine Teilraum mindestens eine radiale, zur Wärmesenke (2) führende Öffnung (158) und der andere Teilraum (159) mindestens eine axiale, zur Atmosphäre führende Öffnung (149) aufweist, dass unterhalb des Dichtsitzes ein zweiter Raum (147) vorhanden ist, der in seinem obersten Bereich mindestens eine radiale, in den Zwischenraum (140) mündende Öffnung (155) aufweist, die bei in Offenstellung befindlichem Verschlusselement (146) mit der axialen Öffnung (149) des anderen Teilraumes (159) kommuniziert, und dass der zweite Raum (147) in einem unteren Bereich mindestens eine radiale, ebenfalls in den Zwischenraum (140) mündende Öffnung (156) aufweist, die bei in Offenstellung befindlichem Verschlusselement (146) mit der radialen Öffnung (158) des einen Teilraumes kommuniziert.

## Claims

1. A plant having a nuclear heating reactor having a pressure vessel (4), the same receiving a reactor core (5) and at least one coolant-conveying primary heat exchanger (6) which co-operates, by way of coolant lines (9, 9') extending through the pressure vessel, with at least one secondary heat exchanger (7) to form a cooling circuit in which means (8) for circulating the coolant are disposed, a heat sink (2) extending around the pressure vessel (4), characterised in that the pressure vessel (4) is double-walled, the two walls (41, 42) bounding a space (40), a supply of a least one flowable heat-insulating agent and a supply of at least one heat-conducting agent communicate with the between-walls space (40) and means are provided which fill the space (40) with the heat-insulating agent for normal operation of the heating reactor and with the heat-conducting agent in the event of a disturbance in reactor core cooling.

2. A plant according to claim 1, characterised in that the heat-insulating agent is air and the heat-conducting agent is water, both agents are contained in a flood tank (31) disposed at a goedetically higher level than the heating reactor and a blower (10) is provided between the flood tank and the top end of the between-walls space as means for filling the same, the total volume of the flood tank being greater than the total volume of the between-walls space and the maximum water-filled volume of the flood tank being at least as great as the volume of the between-walls space.

3. A plant according to claim 2, characterised in that a common driving motor (11) is provided for the blower (10) and the coolant-circulating means (8).

4. A plant according to any of claims 1 to 3, characterised in that each of the two pressure vessel ·walls (41, 42) is dimensioned for the design temperature and design pressure.

5. A plant according to any of claims 2 to 4, comprising a pressure vessel (4) having a cylindricyl portion whose axis is vertical, characterised in that the pressure vessel has a removable and also double-walled (141, 142) cover (14) whose between-walls space (140) communicates with the between-walls space in the cylindrical portion of the pressure vessel, the coolant lines (9, 9') between the primary heat exchanger (6) and the secondary heat exchanger (7) extend through the cover (14) and the air-containing side of the flood tank communicates with the between-walls space (140) of the cover, whereas the water-containing side of the flood tank communicates with the between-walls space in the cylindrical portion of the pressure vessel by way of a line (17) which extends through an end wall (43), the same interconnecting the two walls in the cylindrical portion of the pressure vessel, as far as the bottom region (40) of the between-walls space.

6. A plant according to claim 5, characterised in that a cylindrical guide wall (44) is disposed in the between-walls space of the pressure vessel near the cylindrical portion.

7. A plant according to claim 5, characterised in that the primary heat exchanger (6) is embodied by helically coiled tubes (60) and so secured to the cover (14) as to be demountable together therewith.

8. A plant according to any of claims 1 to 7, characterised in that the pressure vessel (4) has external cooling ribs (46) which are effective as a support and transportation structure and also as a crumple zone to protect the reactor against external mechanical influences.

9. A plant according to any of claims 1 to 8, characterised in that a radiation protection shield (52) is disposed around the reactor core (5) in the pressure vessel.

10. A plant according to any of claims 2 to 9, the heat sink (2) being a water-filled pool (1) confined by a containment, characterised in that the water-containing side of the flood tank is connected to the pool water by way of a check valve (34) so that the water for filling the between-walls space can be amplified by water from the pool.

11. A plant according to any of claims 1 to 10, characterised in that at least one vale lid element (146) movable by its own weight from a normal-operation position into a safety position is provided and in its normal-operation position is pressed on to a sealing seat (153) by means of a support element (16) which is in thermal communication with the inside of the pressure vessel but in other respects is separated therefrom in gastight manner, and the support element (16) is made of a material which melts when a predetermined safety temperature is exceeded.

12. A plant according to claims 2, 10 and 11, having a vertically movable valve lid element (146), characterised in that there is present above the seat (153) a first chamber (148) subdivided by at least one vertical wall (151) into a least two separate subchambers (147, 148) open towards the seat (153), one subchamber being formed with at least one radial bore (158) which extends to the heat sink (2) and the other subchamber (159) being formed with at least one axial bore (149) extending to atmosphere, there is present below the seat (153) a second chamber (147) formed in its top part with at least one radial bore (155) which extends into the between-walls space (140) and which, with the valve lid element (146) in its open position, communicates with the axial bore (149) of the other subchamber (159), and the second chamber (147) is formed in a bottom part with at least one radial bore (156) which also extends into the between-walls space (140) and which, with the valve lid element (146) in its open position, communicates with the radial bore (158) of the first subchamber.


**Revendications**

1. Installation comportant un réacteur nucléaire de chauffage qui comprend une cuve sous pression (4) dans laquelle est contenu un coeur de réacteur (5) ainsi qu'au moins un échangeur de chaleur primaire (6) dans lequel circule un réfrigérant, et qui forme avec au moins un échangeur de chaleur secondaire (7), par les conduits de réfrigérant (9, 9') traversant la cuve sous pression, un circuit de refroidissement dans lequel sont prévus des moyens de refoulement (8) destinés à faire circuler le réfrigérant, la cuve sous pression (4) étant entourée par un dissipateur thermique (2), caractérisée en ce que la cuve sous pression (4) est à double paroi, les deux parois (41, 42) délimitant un volume intermédiaire (40), en ce qu'un réservoir d'au moins un fluide pouvant s'écouler, isolant thermique et un réservoir d'au moins un fluide pouvant s'écouler conducteur thermique, communique avec le volume intermédiaire, et en ce que des moyens sont prévus pour remplir, en fonctionnement normal du réacteur de chauffage, le volume intermédiaire en fluide isolant thermiquement, et que en cas de défaillance du refroidissement du coeur du réacteur, remplissent le volume intermédiaire en fluide conducteur de chaleur.

2. Installation selon la revendication 1, caractérisée en ce que le fluide isolant thermiquement est de l'air et en ce que le fluide conducteur de chaleur est de l'eau, en ce que les deux fluides sont contenus dans un réservoir de remplissage (31) disposé géodésiquement plus haut que le réacteur, et en ce qu'il est prévu comme moyen pour remplir d'air le volume intermédiaire, un ventilateur (10) situé entre le réservoir de remplissage et l'extrémité supérieure du volume intermédiaire, la contenance totale du réservoir de remplissage étant supérieure à la contenance totale du volume intermédiaire, et le volume maximal rempli d'eau réservoir de remplissage étant au moins égal à la contenance du volume intermédiaire.

3. Installation selon la revendication 2, caractérisée en ce qu'il est prévu un moteur d'entraînement (11) commun au ventilateur (10) et aux moyens de refoulement (8).

4. Installation selon l'une des revendications 1 à 3, caractérisée en ce que chacune des deux parois (41, 42) de la cuve sous pression (4) est dimensionnée pour la température nominale et pour la pression nominale.

5. Installation selon l'une des revendications 2 à 4, comportant une cuve sous pression (4) présentant une section cylindrique d'axe vertical, caractérisée en ce que la cuve sous pression est pourvue d'un couvercle (14) amovible, également à double paroi (141, 142) dont le volume intermédiaire communique avec celui de la section cylindrique de la cuve sous pression, en ce que les conduits de réfrigérant (9, 9') traversent le couvercle entre l'échangeur de chaleur primaire (6) et l'échangeur de chaleur secondaire (7), et en ce que le côté du réservoir de remplissage contenant l'air communique avec l'espace intermédiaire (140) du couvercle, tandis que le côté du réservoir de remplissage contenant l'eau communique avec le volume intermédiaire de la section cylindrique de la cuve sous pression, par un conduit (17) qui traverse une paroi frontale (43) assemblant les deux parois de la section cylindrique de la cuve sous pression, et s'étend jusque dans la zone (40) la plus basse du volume intermédiaire.

6. Installation selon la revendication 5, caractérisée en ce qu'une paroi de guidage (44) cylindrique est disposée dans le volume intermédiaire de la cuve sous pression, dans la zone de la section cylindrique.

7. Installation selon la revendication 5, caractérisée en ce que l'échangeur de chaleur primaire (6) est formé par des tubes (60) hélicoïdaux et fixé sur le couvercle, de manière à pouvoir être déposé en même temps que celui-ci.

8. Installation selon l'une des revendications 1 à 7, caractérisée en ce que la cuve sous pression (4) comporte à l'extérieur des ailettes de refroidissement (46) qui constituent une structure d'appui et de transport et qui forment en même temps une zone déformable destinée à protéger le réacteur de chauffage des sollicitations mécaniques extérieures.

9. Installation selon l'une des revendications 1 à 8, caractérisée en ce qu'un bouclier de protection contre les rayonnements (52) est disposé à l'intérieur de la cuve sous pression, autour du coeur (5) du réacteur.

10. Installation selon l'une des revendications 1 à 9, dans laquelle le dissipateur thermique (2) est une piscine (1) remplie d'eau, entourée d'une enceinte de confinement, caractérisée en ce que le côté du réservoir de remplissage contenant de l'eau communique par un clapet de non-retour (34) avec l'eau de la piscine, de sorte que l'eau de remplissage du volume intermédiaire peut être complétée par de l'eau provenant de la piscine.

11. Installation selon l'une des revendications 1 à 10, caractérisée en ce qu'il est prévu au moins un élément de fermeture (146), pouvant se déplacer sous son propre poids d'une position de fonctionnement normal à une position de sécurité, lequel élément de fermeture (146) est pressé en position de fonctionnement normal contre un siège d'étanchéité (153), par un élément d'apui (16) relié thermiquement avec l'intérieur de la cuve sous pression, dans le cas contraire séparé de celui-ci de manière étanche au gaz, et en ce que l'élément d'appui est réalisé dans un matériau qui fond lorsqu'une température de sécurité déterminée est dépassée.

12. Installation selon les revendications 2, 10 et 11, comportant un élément de fermeture (146) se déplaçant verticalement, caractérisée en ce qu'il est prévu au-dessus du siège d'étanchéité (153) un premier volume (148) qui est partagé par au moins une cloison (151) verticale en au moins deux volumes partiels (147, 148) séparés l'un de l'autre, ouverts en direction du siège d'étanchéité, dont un volume partiel comporte au moins une ouverture (158) radiale menant au dissipateur de chaleur (2), et l'autre volume partiel (159) comporte au moins une ouverture (149) axiale menant à l'atmosphère, en ce qu'il est prévu au-dessous du siège d'étanchéité un deuxième volume (147) qui comporte dans sa zone supérieure au moins une ouverture (155) radiale débouchant dans le volume intermédiaire (140), laquelle ouverture communique avec l'ouverture axiale (149) de l'autre volume partiel (159) lorsque l'élément de fermeture (146) est en position ouverte, et en ce que le deuxième volume (147) comporte, dans une zone inférieure, au moins une ouverture (156) radiale, débouchant dans le volume intermédiaire (140), laquelle ouverture communique avec l'ouverture (158) radiale d'un volume partiel, lorsque l'élément de fermeture (146) est en position ouverte.

Fig. 1

Fig. 2

Fig. 3

Fig. 5

Fig. 4

Fig. 6